# EUROPEAN PATENT SPECIFICATION

(11) **EP 4 243 262 B1**
(45) Date of publication and mention of the grant of the patent: **28.01.2026**
(21) Application number: 22161106.4
(22) Date of filing: 09.03.2022
(51) Int. Cl.: H02M 1/34, H02M 3/335

(54) **SELF-DRIVEN ACTIVE CLAMP CIRCUIT CONNECTED TO A FLYBACK CONVERTER**
SELBSTANGETRIEBENE AKTIVE KLEMMSCHALTUNG, VERBUNDEN MIT EINEM FLYBACK-WANDLER
CIRCUIT DE VÉROUILLAGE ACTIF AUTONOME CONNECTÉ À UN CONVERTISSEUR À RÉCUPÉRATION DE TYPE FLYBACK

(43) Date of publication of application: 13.09.2023
(73) Proprietor: Minmax Technology Co., Ltd., Tainan City (TW)
(72) Inventor: WU, Cheng-Chou, Tainan City (TW)
(74) Representative: Melchior, Robin

(56) References cited:
- CN-A- 102 170 232
- CN-B- 107 196 517
- US-B2- 7 764 515

## Description

### BACKGROUND

### 1. Field of the Invention

The present invention relates generally to a self-driven active clamp circuit, and more particularly to an active clamp circuit applied to a flyback converter operating in a boundary current mode (BCM).

### 2. Description of Related Art

Among various power converters, the flyback converter is very common and may be applied for AC (alternating current)-DC (direct current) conversion or DC-DC conversion. In the flyback converter, because a transformer is applied between input and output of the flyback converter, the flyback converter has advantages of circuit isolation. The flyback converters may be categorized as standard flyback converter and active clamp flyback (ACF) converter.

For the purposes including absorption of current spikes, energy recycling, and improvement of conversion efficiency, the clamp switch, which is formed by the metal-oxide-semiconductor field-effect transistor (MOSFET), in the primary-side winding of the transformer of the ACF converter replaces the snubber diode of the standard flyback converter.

The clamp switch is controlled by an individual driving circuit to be turned on and off. Namely, the driving circuit and its power circuit for control are further added to the ACF converter, such that the whole circuit configuration will become much more complicated and detrimental to the reduction in the converter's volume. In addition, while controlling the clamp switch, how to properly drive the clamp switch has to be taken into consideration, such that the conduction loss and the switching loss of the clamp switch will not be too high to have adverse effect on the whole conversion efficiency of the power converter.

Related prior art is described for reference as follows:
CN 102170232 A discloses a "Self-driven active buffer and flyback switching mode power supply".
CN 107196517 B discloses a "Drive circuit of a clamp switch in a switching power supply".
US 7,764,515 B2 discloses a "Two terminals quasi resonant tank circuit".

### SUMMARY OF THE INVENTION

An objective of the present invention is to provide a self-driven active clamp circuit applied to a flyback converter. The present invention can turn on and off a clamp switch without adding further more driving circuits. Besides, the clamp switch while turned on has lower conduction loss and reaches a zero voltage switching (ZVS) itself, such that the switching loss of the clamp loss will be decreased.

The self-driven active clamp circuit of the present invention is applied to a flyback converter having a transformer and a switch. The self-driven active clamp circuit of the present invention comprises a clamp switch. The clamp switch is connected between a first capacitor and a second capacitor in series, wherein another terminal of the first capacitor is connected to a first terminal of a primary-side winding of the transformer, and another terminal of the second capacitor is connected to a second terminal of the primary-side winding of the transformer and the switch of the flyback converter. The present invention is characterized in that the self-driven active clamp circuit further comprises a diode and a resistor. An anode of the diode is connected to a control terminal of the clamp switch, and a cathode of the diode is connected to the second terminal of the primary-side winding of the transformer and the switch of the flyback converter. A terminal of the resistor is connected to a control terminal of the clamp switch. Another terminal of the resistor is connected to the second terminal of the primary-side winding of the transformer and the switch of the flyback converter. The clamp switch is a metal-oxide-semiconductor field-effect transistor (MOSFET) comprising a parasitic capacitance between the control terminal and a source of the clamp switch.

Preferably, the clamp switch has a gate as the control terminal, a drain connected to the first capacitor, and the source connected to the second capacitor.

The self-driven active clamp circuit of the present invention can autonomously turn on and off the clamp switch according to the voltage polarity of the primary-side winding of the transformer. The present invention not only absorbs the current spike by the first capacitor and the second capacitor, but also provides the gate of the clamp switch with an ideal driving voltage by a proper selection for the capacitance of the second capacitor. The clamp switch while turned on may have lower on-state resistance (R_{DS}), such that the loss will be reduced.

### BRIEF DESCRIPTION OF THE DRAWINGS

Fig. 1 is a circuit diagram of the self-driven active clamp circuit of the present invention applied to the flyback converter;
**Fig.** 2A is a waveform diagram of the output voltage V_{O} as shown in Fig. 1;
Fig. 2B is a waveform diagram of the voltage V_{C2} between two terminals of the second capacitor (C2) as shown in Fig. 1;
Fig. 2C is a waveform diagram of the voltage V_{C1} between two terminals of the first capacitor (C1) as shown in Fig. 1;
Fig. 2D is a waveform diagram of the drain-source voltage V_{Q2-DS} of the clamp switch (Q2) as shown in Fig. 1;
Fig. 2E is a waveform diagram of the voltage V_{Q2-G} between the gate and the source of the clamp switch (Q2) as shown in **Fig.** 1;
Fig. 2F is a waveform diagram of the drain-source voltage V_{Q1-DS} of the switch (Q1) of the flyback converter as shown in **Fig.** 1;
Fig. 2G is a waveform diagram of the gate voltage V_{Q1-G} of the switch (Q1) of the flyback converter as shown in Fig. 1;
Fig. 2H is a waveform diagram of the voltage V_{P} between two terminals of the primary-side winding of the transformer as shown in Fig. 1;
Fig. 3 is a circuit diagram of the operation that the switch (Q1) is turned off and the clamp switch (Q2) is turned on; and
Fig. 4 is a circuit diagram of the operation that the switch (Q1) is turned on and the clamp switch (Q2) is turned off.

### DETAILED DESCRIPTION OF THE INVENTION

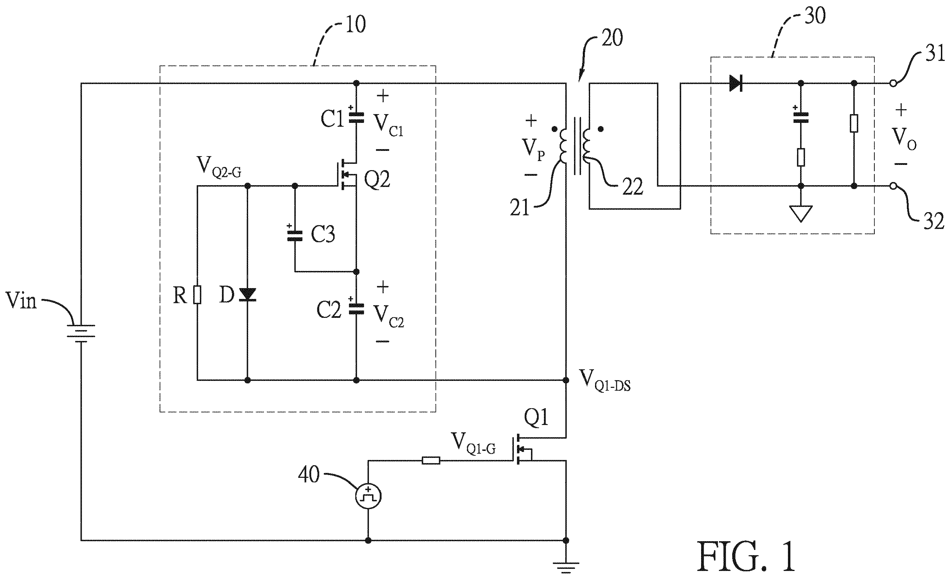

The self-driven active clamp circuit of the present invention is connected to a flyback converter. Fig. 1 shows an example of a circuit configuration of the flyback converter. Working principle of the flyback converter is not the focus in the present invention, so is introduced briefly as follows.

At first, fundamental components of the flyback converter may comprise a transformer 20, a switch Q1, and an output circuit 30. A primary-side winding 21 of the transformer 20 is connected to the switch Q1 in series. The switch Q1 may be formed by a metal-oxide-semiconductor field-effect transistor (hereinafter referred to as MOSFET), having a gate connected to a pulse width modulation (hereinafter referred to as PWM) controller 40. The PWM controller 40 outputs a PWM signal to the switch Q1 to turn on or off the switch Q1. A drain of the switch Q1 is connected to the primary-side winding 21. The source of the switch Q1 is grounded. A terminal of the primary-side 21 of the transformer 20 is connected to an input power Vin, such as a DC (direct current) power as an example herein.

The output circuit 30 is connected to a secondary-side winding 22 of the transformer 20 and comprises two output terminals 31, 32 to be connected to load(s). The primary-side winding 21 and the secondary-side winding 22 of the transformer 20 are not connected to a same ground.

The self-driven active clamp circuit 10 of the present invention is connected to the transformer 20 and the switch Q1 and comprises a clamp switch Q2, a first capacitor C1, a second capacitor C2, and a resistor R. The self-driven active clamp circuit 10 of the present invention may further comprise a diode D. A terminal of the clamp switch Q2 is connected to the first capacitor C1. Another terminal of the clamp switch Q2 is connected to the second capacitor C2. Hence, the clamp switch Q2 is connected between the first capacitor C1 and the second capacitor C2 in series. A control terminal of the clamp switch Q2 is connected to the resistor R and the diode D.

In an embodiment of the present invention, the clamp switch Q2 is formed by a MOSFET. A parasitic capacitance C3 exists between a gate and a source of the clamp switch Q2. The gate of the clamp switch Q2 is deemed as the above-mentioned control terminal. A drain and the source of the clamp switch Q2 are connected to the first capacitor C1 and the second capacitor C2 respectively.

A terminal of the first capacitor C1 is connected to the primary-side winding 21 of the transformer 20 and the input power Vin. Another terminal of the first capacitor C1 is connected to the drain of the clamp switch Q2.

A terminal of the second capacitor C2 is connected to the source of the clamp switch Q2. Another terminal of the second capacitor C2 is connected to the drain of the switch Q1 of the flyback converter.

An anode of the diode D is connected to the gate of the clamp switch Q2. A cathode of the diode D is connected to the drain of the switch Q1 of the flyback converter. The resistor R is connected to two terminals of the diode D, such that the resistor R is connected across the diode D.

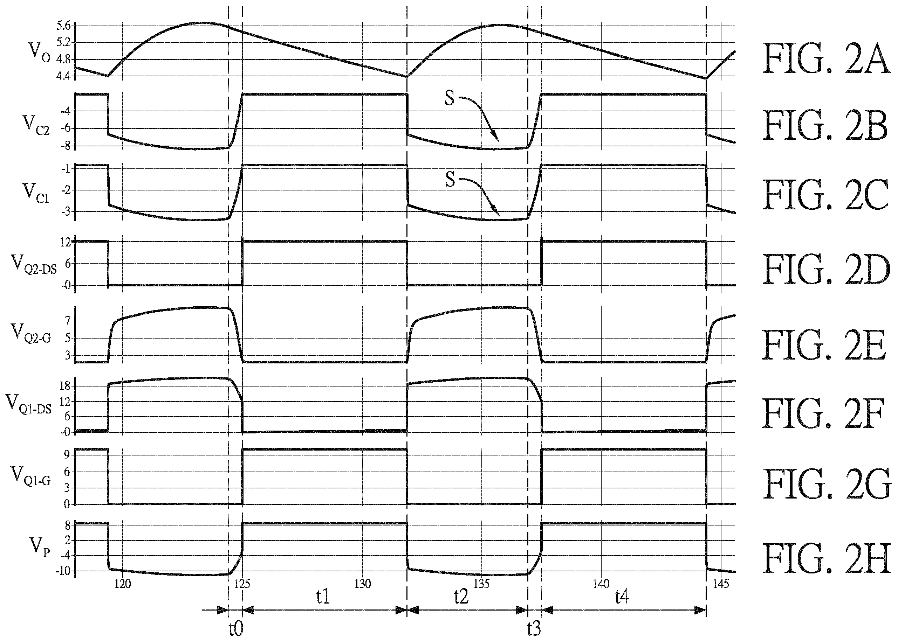

With reference to the voltage waveform diagrams shown in Figs. 2A to 2H, the vertical axis represents voltage value (V), and the horizontal axis represents the time. The circuit operation of the present invention is described as follows.

Time segment t0: Under the boundary current mode (BCM), the voltage V_{P} on the primary-side winding 21 of the transformer 20 is gradually reduced to 0V. The voltage V_{C2} on the second capacitor C2 is reduced to 0V, too. The parasitic capacitance C3 is discharged via the diode D, such that the voltage on the parasitic capacitance C3 is reduced to 0V rapidly. As a result, the gate voltage of the clamp switch Q2 will be lower than a turn-on threshold voltage (Vgs-th). Then, the clamp switch Q2 is turned off. At that time, as the voltage reduction of the voltage V_{P} on the primary-side winding 21, the drain-source voltage V_{Q1-DS} of the switch Q1 is reduced to 0V from a prior high voltage level, and a signal of high is sent to the gate voltage V_{Q1-G} of the switch Q1. Control mode of the switch Q1 reaches a zero voltage switching (ZVS).

Time segment t1: The switch Q1 is turned on. In other words, the switch Q1 changes to on-state from a prior off-state. The voltage V_{P} of the primary-side winding 21 rises to Vin from 0V.

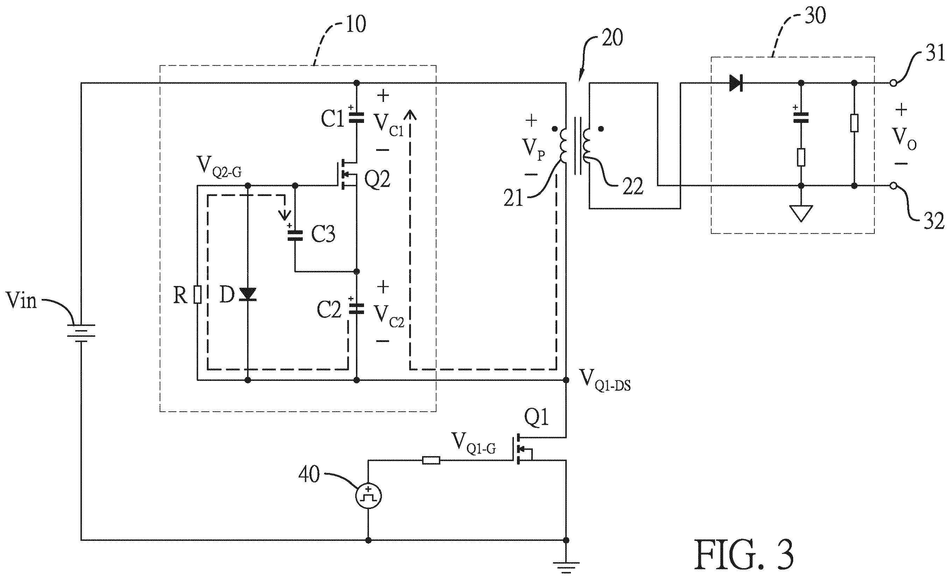

Time segment t2: When gate voltage V_{Q1-G} of the switch Q1 is reduced to a low voltage level (such as the low level in the PWM signal), the switch Q1 changes to the off-state. Because the switch Q1 changes to off-state from a prior on-state, an inverse voltage is generated on the primary-side winding 21 of the transformer 20, so the voltage V_{P} of the primary-side winding 21 shown in Fig. 2H is negative. With reference to Fig. 3, the voltage V_{P} charges the second capacitor C2 and the first capacitor C1 via a body diode of the clamp switch Q2. Within the charging duration of the second capacitor C2 and the first capacitor C1, the second capacitor C2 and the first capacitor C1 also absorb the current spike induced by the leakage inductance of the transformer 20. Then, the second capacitor C2 and the first capacitor C1 will be gradually charged to reach a steady state. Since the body diode is turned on previously, the drain-source voltage V_{Q2-DS} of the clamp switch Q2 is reduced to be lower than approximation of the forward voltage (VF) of the body diode before a driving signal is sent to the clamp switch Q2, as shown in the position "S" of Figs. 2B and 2C. Within the charging duration of the second capacitor C2, as shown in Fig. 3, the second capacitor C2 may charge the parasitic capacitance C3 via the resistor R. When the voltage on the parasitic capacitance C3 reaches the turn-on threshold voltage (Vgs-th) of the clamp switch Q2, the clamp switch Q2 changes to on-state to implement the zero voltage switching (ZVS) and absorb the current spike. The resistor R plays a role of a delay component. While charging and based on the delay time determined by the resistor R and the parasitic capacitance C3, the gate voltage V_{Q2-G} of the clamp switch Q2 reaches the turn-on threshold voltage (Vgs-th) only when the drain-source voltage V_{Q2-DS} is reduced to approximation of the forward voltage (VF) of the body diode, such that drive and control for the clamp switch Q2 can meet the requirement of the zero voltage switching.

Time segment t3: Under the boundary current mode (BCM), the voltage V_{P} of the primary-side winding 21 of the transformer 20 will be reduced to 0V gradually. The voltage V_{C2} on the two terminals of the second capacitor C2 is reduced to 0V, too. The parasitic capacitance C3 is discharged via the diode D, such that the voltage on the parasitic capacitance C3 is reduced to 0V rapidly. As a result, the gate voltage of the clamp switch Q2 will be lower than the turn-on threshold voltage (Vgs-th). Then, the clamp switch Q2 is turned off. Because the clamp switch Q2 can be turned off rapidly, the switching loss of the clamp switch Q2 will be decreased. The drain-source voltage V_{Q1-DS} of the switch Q1 is gradually reduced to 0V from a prior high voltage level, and the operation within the time segment t0 will be repeated.

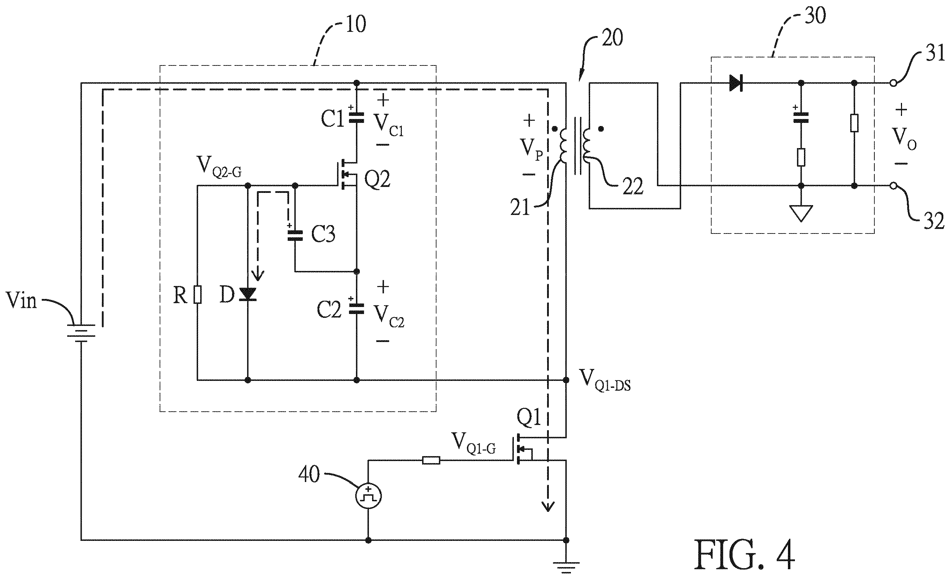

Time segment t4: The switch Q1 is turned on. As shown in Fig. 4, the operation within the time segment t1 will be repeated.

In a preferred embodiment, in order to minimize the on-state resistance (R_{DS}) and the loss of the clamp switch Q2 while turned on, an ideal driving voltage around 10V as an example should be retained on the gate of the clamp switch Q2. In general, the sum of voltage of the first capacitor C1 and the second capacitor C2, represented as V_{C1}+V_{C2}, is approximately equal to the voltage V_{P} of the primary-side winding 21 while discharging, wherein V_{P} is as the inverse voltage. At that time, the relationship regarding the voltage VP, a winding number N_{P} of the primary-side winding 21, and a winding number N_{S} of the secondary-side winding 22 may be represented as V_{P}=[(N_{S}/N_{P})×V_{O}]. In the design practice for the converter, the voltage V_{P} is limited by the winding ratio and fails to approximate the ideal driving voltage of 10V due to various demands for input/output. In the present invention, by selecting a proper capacitance value for the second capacitor C2, the ideal driving voltage approximating 10V will be obtained on the second capacitor C2 according to the voltage division by the first capacitor C1 and the second capacitor C2. The gate of the clamp switch Q2 will have a proper driving voltage. Then the present invention will achieve the ideal driving effect.

In conclusion, the self-driven active clamp circuit of the present invention can autonomously turn on and off the clamp switch Q2 according to the polarity of VP of the primary-side winding 21 without adding further more driving circuits. The self-driven active clamp circuit of the present invention not only absorbs the current spike, but also provides the gate of the clamp switch Q2 with the ideal driving voltage by the properly selected second capacitor C2, such that the clamp switch Q2 while turned on may have lower on-state resistance (R_{DS}), and the loss will be reduced.

## Claims

1. A self-driven active clamp circuit (10), wherein the self-driven active clamp circuit (10) is connected to a flyback converter having a transformer (20) and a switch (Q1) and comprises:
a clamp switch (Q2) connected between a first capacitor (C1) and a second capacitor (C2) in series, wherein another terminal of the first capacitor (C1) is connected to a first terminal of a primary-side winding (21) of the transformer (20), and another terminal of the second capacitor (C2) is connected to a second terminal of the primary-side winding (21) of the transformer (20) and the switch (Q1) of the flyback converter;
**characterized in that** the self-driven active clamp circuit (10) further comprises:
a diode (D), wherein an anode of the diode (D) is connected to a control terminal of the clamp switch (Q2), and a cathode of the diode (D) is connected to the second terminal of the primary-side winding (21) of the transformer (20) and the switch (Q1) of the flyback converter; and
a resistor (R), wherein a terminal of the resistor (R) is connected to the control terminal of the clamp switch (Q2), and another terminal of the resistor (R) is connected to the second terminal of the primary-side winding (21) of the transformer (20) and the switch (Q1) of the flyback converter;
wherein the clamp switch (Q2) is a metal-oxide-semiconductor field-effect transistor comprising a parasitic capacitance (C3) between the control terminal and a source of the clamp switch (Q2).

2. The self-driven active clamp circuit (10) as claimed in claim 1, wherein the clamp switch (Q2) has a gate as the control terminal, a drain connected to the first capacitor (C1), and the source connected to the second capacitor (C2).

3. The self-driven active clamp circuit (10) as claimed in claim 2, wherein only when a voltage between the drain and the source of the clamp switch (Q2) is reduced to 0V, a gate voltage of the clamp switch (Q2) rises to turn on the clamp switch (Q2), such that the clamp switch (Q2) operates in zero voltage switching.

4. The self-driven active clamp circuit (10) as claimed in claim 3, wherein when the clamp switch (Q2) is turned on, the primary-side winding (21) of the transformer (20) generates an inverse voltage to charge the first capacitor (C1) and the second capacitor (C2).

## Patentansprüche

1. Selbstangetriebene aktive Klemmschaltung (10), wobei die selbstangetriebene aktive Klemmschaltung (10) mit einem Sperrwandler verbunden ist, der einen Transformator (20) und einen Schalter (Q1) aufweist, und Folgendes umfasst:
einen Klemmschalter (Q2), der zwischen einem ersten Kondensator (C1) und einem zweiten Kondensator (C2) in Reihe geschaltet ist, wobei ein weiterer Anschluss des ersten Kondensators (C1) mit einem ersten Anschluss einer primärseitigen Wicklung (21) des Transformators (20) verbunden ist und ein weiterer Anschluss des zweiten Kondensators (C2) mit einem zweiten Anschluss der primärseitigen Wicklung (21) des Transformators (20) und dem Schalter (Q1) des Sperrwandlers verbunden ist;
**dadurch gekennzeichnet,**
**dass** die selbstangetriebene aktive Klemmschaltung (10) ferner umfasst:
eine Diode (D), wobei eine Anode der Diode (D) mit einem Steueranschluss des Klemmschalters (Q2) verbunden ist, und eine Kathode der Diode (D) mit dem zweiten Anschluss der primärseitigen Wicklung (21) des Transformators (20) und dem Schalter (Q1) des Sperrwandlers verbunden ist; und
einen Widerstand (R), wobei ein Anschluss des Widerstands (R) mit dem Steueranschluss des Klemmschalters (Q2) verbunden ist und ein anderer Anschluss des Widerstands (R) mit dem zweiten Anschluss der primärseitigen Wicklung (21) des Transformators (20) und dem Schalter (Q1) des Sperrwandlers verbunden ist;
wobei der Klemmschalter (02) ein Metalloxid-Halbleiter-Feldeffekttransistor ist, der eine parasitäre Kapazität (C3) zwischen dem Steueranschluss und einer Quelle des Klemmschalters (02) aufweist.

2. Selbstangetriebene aktive Klemmschaltung (10), nach Anspruch 1, wobei
der Klemmschalter (Q2) ein Gate als Steueranschluss, einen mit dem ersten Kondensator (C1) verbundenen Drain und eine mit dem zweiten Kondensator (C2) verbundene Source aufweist.

3. Selbstangetriebene aktive Klemmschaltung (10), nach Anspruch 2, wobei
nur dann, wenn eine Spannung zwischen dem Drain und der Source des Klemmschalters (Q2) auf 0 V reduziert wird, eine Gate-Spannung des Klemmschalters (02) ansteigt, um den Klemmschalter (02) einzuschalten, so dass der Klemmschalter (Q2) im Nullspannungsschaltbetrieb arbeitet.

4. Selbstangetriebene aktive Klemmschaltung (10), nach Anspruch 3, wobei,
wenn der Klemmschalter (Q2) eingeschaltet ist, die primärseitige Wicklung (21) des Transformators (20) eine inverse Spannung erzeugt, um den ersten Kondensator (C1) und den zweiten Kondensator (C2) aufzuladen.

## Revendications

1. Circuit de calage actif autonome (10), le circuit de calage actif autonome (10) étant connecté à un convertisseur à transfert indirect ayant un transformateur (20) et un commutateur (Q1) et comprenant:
un commutateur de calage (Q2) connecté entre un premier condensateur (C1) et un second condensateur (C2) en série, une autre borne du premier condensateur (C1) étant connectée à une première borne d'un enroulement côté primaire (21) du transformateur (20), et une autre borne du second condensateur (C2) étant connectée à une seconde borne de l'enroulement côté primaire (21) du transformateur (20) et au commutateur (Q1) du convertisseur à transfert indirect;
**caractérisé par le fait que** le circuit de calage actif autonome (10) comprend en outre:
une diode (D), une anode de la diode (D) étant connectée à une borne de commande du commutateur de calage (Q2), et une cathode de la diode (D) étant connectée à la seconde borne de l'enroulement côté primaire (21) du transformateur (20) et au commutateur (Q1) du convertisseur à transfert indirect; et
une résistance (R), une borne de la résistance (R) étant connectée à la borne de commande du commutateur de calage (Q2), et une autre borne de la résistance (R) étant connectée à la seconde borne de l'enroulement côté primaire (21) du transformateur (20) et au commutateur (Q1) du convertisseur à transfert indirect;
dans lequel le commutateur de calage (Q2) est un transistor à effet de champ métal-oxyde-semiconducteur comprenant une capacité parasite (C3) entre la borne de commande et une source du commutateur de calage (Q2).

2. Circuit de calage actif autonome (10) selon la revendication 1, dans lequel le commutateur de calage (Q2) a une grille en tant que borne de commande, un drain connecté au premier condensateur (C1) et la source connectée au second condensateur (C2).

3. Circuit de calage actif autonome (10) selon la revendication 2, dans lequel, uniquement lorsqu'une tension entre le drain et la source du commutateur de calage (Q2) est réduite à 0V, une tension de grille du commutateur de calage (Q2) s'élève pour fermer le commutateur de calage (Q2), de telle sorte que le commutateur de calage (Q2) fonctionne en commutation à tension nulle.

4. Circuit de calage actif autonome (10) selon la revendication 3, dans lequel, lorsque le commutateur de calage (Q2) est fermé, l'enroulement côté primaire (21) du transformateur (20) génère une tension inverse pour charger le premier condensateur (C1) et le second condensateur (C2).
